# EUROPEAN PATENT APPLICATION

(11) **EP 1 155 779 A2**
(43) Date of publication of application: **21.11.2001**
(21) Application number: 01500107.6
(22) Date of filing: 20.04.2001
(51) Int. Cl.: B24B 41/04, B24B 47/12

(54) **Grinding machine with a harmonic drive reducer wheelhead**

(30) Priority: 16.05.2000 ES 200001210
(71) Applicant: Danobat, S. Coop., 20870 Elgoibar (Guipuzcoa) (ES)
(72) Inventor: de Luis Vicaino, Elias, 20870 Elgoibar (Gipuzkoa) (ES)

(57) **Abstract**

Grinding machine with a wheelhead (1) with rotation capability, which has a shaft drive motor (4) generating the rotary movement for turning the wheelhead (1) and a reducer (5) that transmits the movement of the motor (4) to the wheelhead (1). Said reducer (5) is a harmonic drive reducer, both the reducer (5) and the motor (4) being housed in said wheelhead (1).

## Description

### TECHNICAL FIELD

The present invention relates to grinding machines and more specifically to systems for turning wheelheads on grinding machines.

### PRIOR ART

Grinding machines with a wheelhead that can be turned in order to change the wheel or to alter the alignment of the wheel in relation to the workpiece are already known.

The devices in existence hitherto have consisted of worm wheel gear type drive systems, indirect mechanical drives of the connecting rod-crank type combined with screw systems, belt drive systems, and a wide variety of combinations of these types of components.

Worm wheel gear drive systems achieve a very high reduction, which facilitates their application but at the expense of a low efficiency and a positioning that is not particularly precise, unless the mechanical quality of its components is very high and therefore expensive.

Furthermore, indirect systems of the connecting rod-crank type combined with screw systems provide good precision but they are limited in respect of the possible turning angle.

Harmonic drive reducers are already known. US4625582 describes the main features of this type of drive.

### DISCLOSURE OF THE INVENTION

The object of the invention is to provide a grinding machine with a wheelhead with rotation capability, which includes a harmonic drive reducer, as defined in the claims.

On the grinding machine of the invention the wheelhead is turned by a motor whose movement is transmitted to said wheelhead by way of a harmonic drive reducer.

The use of a reducer of this type provides a relationship between size, reduction and performance better than those existing with the reduction systems used hitherto, so that it is possible to use a low torque motor which can be housed in the motor-reducer assembly in the wheelhead, without needing said wheelhead to be oversized.

In this way, a rotary wheelhead is obtained that has the following main advantages:
- Installation of the motor and reducer in the wheelhead provides a compact rigid assembly, so that a space saving is obtained.
- The system drive costs are reduced by the use of low power motor units.

### DESCRIPTION OF THE DRAWINGS

FIG. 1 is a front view of an embodiment of the system for turning the wheelhead according to the invention.

FIG. 2 shows the reducer used in the embodiment of FIG. 1.

### DETAILED DISCLOSURE OF THE INVENTION

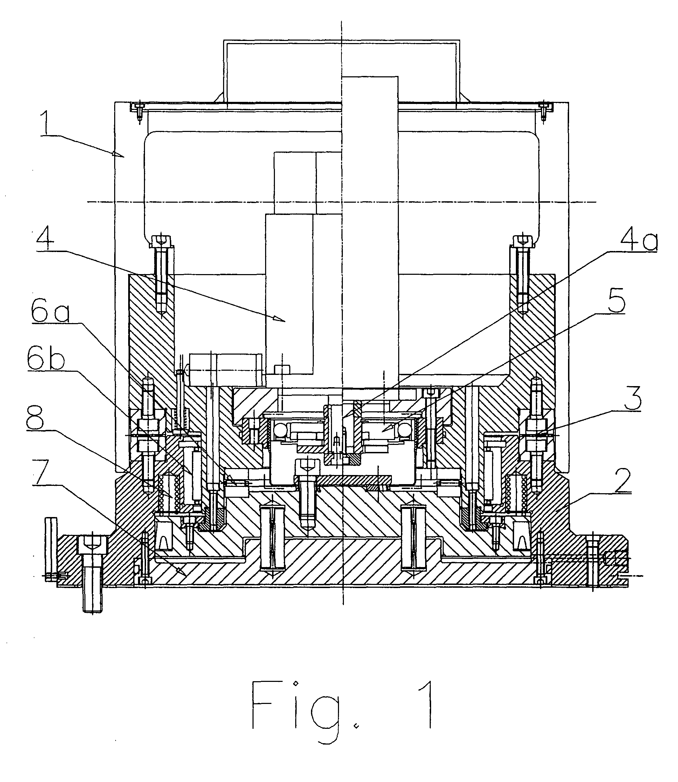

With reference to FIG. 1, the system for turning the wheelhead 1 of a grinding machine in respect of a fixed support 2 includes:
- front toothing 3 that provides a limited series of high precision positions for wheelhead 1 in respect of the support 2,
- a shaft drive motor 4 built into the wheelhead 1,
- a harmonic drive reducer 5 attached to said motor 4,
- bearings 6a and 6b for turning the wheelhead 1, and
- a cylinder 7 for locking and unlocking the front toothing 3.

The rotation system works as follows: the cylinder 7 raises the wheelhead 1 by disengaging the front toothing 3, which allows the motor 4 to rotate the wheelhead 1 by means of the reducer 5 resting on the bearings 6a and 6b.

Said rotation, which is governed by the machine numeric control, orientates the wheelhead 1 to the desired new position. When said position is reached, the cylinder 7 ceases to act and the lock springs 8 plus the weight of the wheelhead 1 interlock the front toothing 3.

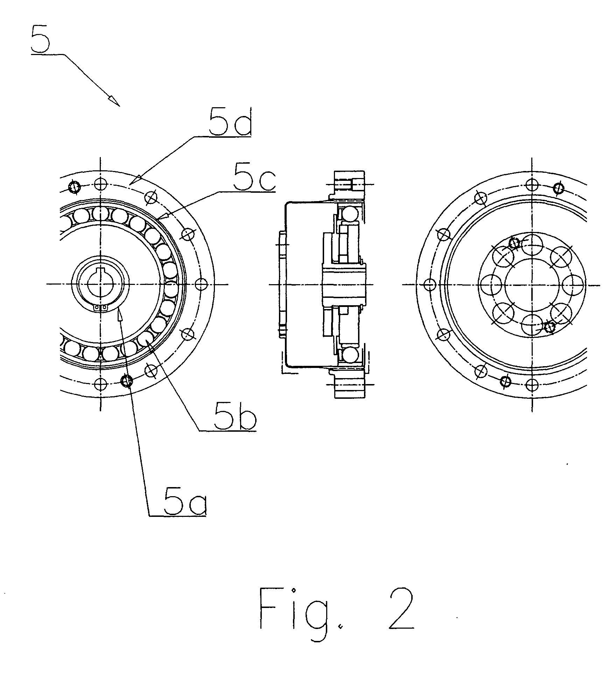

With reference now to FIG. 2, the reducer 5 used has a single reduction stage. Said reduction is produced by the movement transmitting mechanism 5c, which consists of two toothed belts (not shown in the figure), the second belt having a larger number of teeth than the former. Said belts are located between the external support 5d of the reducer 5 and the bearing 5b which is attached to the core 5a of the reducer 5. The core 5a moves with the shaft 4a of the motor, which is housed in the hole in said core 5a, and the external support 5d is bolted to the body of wheelhead 1. To permit the attachment of the reducer 5 inside the wheelhead 1, the housing with which this type of reducer is usually provided is dispensed with.

Optimum reduction of reducer 5 has to be over 100, as the current shaft drive motors reach easily 3000 r.p.m., so that, as the rotation of wheelhead 1 will never exceed 30 r.p.m., the whole output of the motor is thereby utilised.

A reduction ratio of more than 100 means that the reducer has to withstand very high torques at its output. With the reducer 5 of this invention, this is no problem as it is the actual body of the wheelhead 1 which withstands said torque directly.

## Claims

1. A grinding machine with a wheelhead (1) with rotation capability, said grinding machine having a shaft drive motor (4) that generates the rotary movement for turning the wheelhead (1) and a reducer (5) that transmits the movement of the motor (1) to the wheelhead (1), **characterised in that** said reducer (5) is a harmonic drive reducer, both the reducer (5) and the motor (4) being housed in said wheelhead (1).

2. A grinding machine according to claim 1, **characterised in that** the reducer (5) is single stage and has a core (5a), an external support (5d) and means (5b, 5c) that transmit the movement of said core (5a) by means of the harmonic drive to said external support (5d), the core (5a) rotating with the shaft (4a) of the motor (4) and the external support (5d) being fastened to the wheelhead (1).

3. A grinding machine according to the preceding claims, **characterised in that** the reduction ratio of the reducer (5) is higher than 100.
